# EUROPEAN PATENT APPLICATION

(11) **EP 4 759 834 A1**
(43) Date of publication of application: **17.06.2026**
(21) Application number: 24865859.3
(22) Date of filing: 12.09.2024
(51) Int. Cl.: C08B 15/05, H01M 50/429, H01M 50/443, H01M 50/446

(54) **METAL OXIDE-NANOCELLULOSE FIBER, POROUS FILM COMPRISING SAME, AND SEPARATOR FOR SECONDARY BATTERY**

(30) Priority: 14.09.2023 KR 20230122792
(71) Applicant: LG Electronics Inc., Yeongdeungpo-gu Seoul 07336 (KR)
(72) Inventor: PARK, Koun, Seoul 06772 (KR); KANG, Eunseck, Seoul 06772 (KR)
(74) Representative: Schornack, Oliver
(86) International application number: PCT/KR2024/013850
(87) International publication number: WO 2025/058420

(57) **Abstract**

The present invention relates to metal oxide-nanocellulose fibers, a porous film comprising the same, and a separator for a secondary battery manufactured therefrom. More specifically, the present invention relates to metal oxide-nanocellulose fibers, a porous film comprising the same, and a separator for a secondary battery manufactured therefrom, wherein a metal oxide is chemically bonded to a surface of nanocellulose without using an organic binder, thereby providing excellent heat resistance at high temperatures and enabling a relatively thin film.

## Description

### [Technical Field]

The present invention relates to a metal oxide-nanocellulose fibers, a porous film comprising the same, and to a separator for a secondary battery manufactured therefrom. More particularly, the present invention relates to a metal oxide-nanocellulose fibers, a porous film comprising the same, and a secondary-battery separator manufactured therefrom, wherein a metal oxide is chemically bonded to a surface of nanocellulose without using an organic binder, thereby exhibiting excellent heat resistance at elevated temperatures while enabling a relatively thin film.

### [Background Art]

With the increasing demand for high-performance electronic devices, the demand for secondary batteries has been continuously expanding. Accordingly, secondary batteries having high performance such as high energy density and high power density are increasingly required.

A separator serves as an insulating membrane that prevents a short circuit by blocking electron conduction while permitting migration of ions between a cathode and an anode in a secondary battery. Since a separator provides a physical insulation function, it plays an important role in the safety of the battery.

Conventional separators for secondary batteries have mostly employed a structure in which inorganic particles are coated on a polyolefin-based porous film substrate. In such separators, alumina particles having a size of about 0.5 to 1 µm are typically coated on a polyolefin porous film such as polyethylene (PE) or polypropylene (PP) in order to enhance heat resistance. However, when exposed to high temperatures, adhesion of an organic binder having low thermal stability decreases, causing alumina particles to detach and thereby resulting in reduced durability.

In addition, since the alumina particle coating layer is formed on the film substrate, the separator thickness inevitably increases due to the coating layer. As the separator becomes thicker, the amounts of cathode and anode active materials that can be accommodated in a battery decrease, which leads to a reduction in energy density. (Related prior art: Korean Patent Application Publication No. 2013-0037386, published on Apr. 16, 2013.)

To address these problems, a method has been developed in which silica nanoparticles are formed on a surface of nanocellulose by a sol-gel method to manufacture a porous film. This approach may be advantageous in that detachment of silica nanoparticles is suppressed and a uniform porous film can be produced by inhibiting hydrogen bonding. However, silica formed by the sol-gel method tends to readily trap lithium ions and thus interferes with lithium-ion transport during charge and discharge of a secondary battery, which can critically impair battery operation. (Related prior art: Korean Patent Application Publication No. 2020-0042220, published on Apr. 23, 2020.)

### [DISCLOSURE]

### [Technical Problem]

In order to solve the above-described problems, an object of the present invention is to provide a metal oxide-nanocellulose fibers, a porous film comprising the same, and a separator for a secondary battery manufactured therefrom, wherein a metal oxide is chemically bonded to a surface of nanocellulose without using an organic binder, thereby exhibiting excellent heat resistance at elevated temperatures while enabling a relatively thin film.

### [Technical Solution]

To achieve the above object, the present invention relates to nanocellulose fibers having a metal oxide represented by Formula 1 chemically bonded to a surface thereof, and a porous film comprising the same:

[Formula 1] M₂O₃

(wherein M is a Group 13 metal element in the Periodic Table).

The metal oxide may be alumina (Al₂O₃), and the metal oxide may be chemically bonded to the surface of the nanocellulose fibers in a form of particles, or may be present in a coated form chemically bonded to the surface of the nanocellulose fibers.

In another aspect, the present invention relates to a method for producing a porous film, the method comprising: a first step of preparing a reaction solution by introducing a metal alkoxide represented by Formula 2 and nanocellulose fibers into water or an organic solvent; a second step of introducing a reaction catalyst into the reaction solution and performing a sol-gel reaction to synthesize metal oxide-nanocellulose in which a metal oxide is chemically bonded to a surface of the nanocellulose fibers; a third step of washing the synthesized metal oxide-nanocellulose using a washing solvent; and a fourth step of producing a film having a predetermined thickness by subjecting a dispersion, in which the washed metal oxide-nanocellulose is dispersed in water or an organic solvent at a predetermined concentration, to a film-forming process. 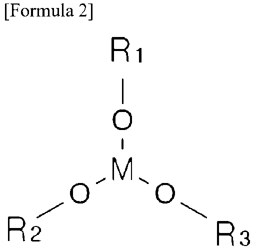 (wherein M is a Group 13 metal element in the Periodic Table, and R₁ to R₃ are the same as or different from each other and each independently hydrogen or C₁₋₂₀ alkyl).

In another aspect, the present invention relates to a separator for a secondary battery and an electrolyte for an all-solid-state battery, each comprising the porous film.

### [Advantageous Effect]

The nanocellulose fibers having a metal oxide chemically bonded thereto according to the present invention exhibit excellent heat resistance even at high temperatures of 200°C or higher.

In addition, since the porous film of the present invention uses, as the porous film itself, nanocellulose fibers having a metal oxide chemically bonded thereto, the process is relatively simple compared to coating-type processes, excellent heat resistance can be maintained even at high temperatures of 200°C or higher, and, since no separate coating layer is required, the porous film can be made thinner, thereby contributing to improved energy density.

Further, according to the present invention, since alumina particles, which are commonly used in conventional battery separators, are chemically bonded to nanocellulose in an inorganic particle form, lithium-ion transport in the battery is not adversely affected.

In addition, alumina nanoparticles are advantageous for forming nanopores, and thus the porous film may be applied to, for example, a composite film in which an alumina-nanocellulose film is combined with a solid electrolyte. An all-solid-state battery according to the present invention can improve thermal safety and durability, and, since a film lamination process is applicable during manufacturing, ease of production and cost reduction can also be achieved.

Further, according to the present invention, since the particle size and bonding form of the metal oxide can be controlled by adjusting reaction conditions during synthesis, the porous film can be optimized into a desired film form suitable for the required technical field.

### [Description of Drawings]

FIG. 1 is a schematic view illustrating a structure of metal oxide-nanocellulose fibers according to the present invention.
FIG. 2 is a flowchart illustrating a method for producing a porous film according to the present invention.
FIG. 3 is an SEM image of alumina particle-bonded nanocellulose fibers of Example 1 according to the present invention.
FIG. 4 is an SEM image of alumina-coated nanocellulose fibers of Example 2 according to the present invention.
FIG. 5 is an SEM image of non-surface-treated nanocellulose fibers of Comparative Example.
FIG. 6 is an SEM image of an alumina particle-bonded nanocellulose porous film of Example 1 according to the present invention.
FIG. 7 is an SEM image of an alumina-coated nanocellulose porous film of Example 2 according to the present invention.
FIG. 8 is an SEM image of a non-surface-treated nanocellulose film of Comparative Example.
FIG. 9 shows EDS elemental analysis results of alumina particle-bonded nanocellulose fibers of Example 1 according to the present invention.
FIG. 10 shows EDS elemental analysis results of non-surface-treated nanocellulose fibers of Comparative Example.
FIG. 11 shows XPS elemental analysis results of alumina particle-bonded nanocellulose fibers of Example 1 according to the present invention.
FIG. 12 shows XPS elemental analysis results for an Al narrow peak of alumina particle-bonded nanocellulose fibers of Example 1 according to the present invention.
FIG. 13 shows XPS elemental analysis results of non-surface-treated nanocellulose fibers of Comparative Example.
FIGS. 14(a) and 14(b) are images showing thermal shrinkage test results of an alumina particle-bonded nanocellulose porous film of Example 1 according to the present invention and a polyolefin-based porous film, respectively.
FIG. 15 is a graph showing thermal shrinkage test results of an alumina particle-bonded nanocellulose porous film of Example 1 according to the present invention.

### [Mode for Invention]

Hereinafter, exemplary embodiments of the present invention will be described in detail with reference to the accompanying drawings.
While the present invention may be embodied in various modifications and variations, specific embodiments thereof are illustrated in the drawings and will be described in detail below. However, it is not intended to limit the present invention to the particular forms disclosed herein; rather, the present invention includes all modifications, equivalents, and alternatives falling within the spirit and scope of the present invention as defined by the appended claims.

The present invention relates to nanocellulose fibers having a metal oxide represented by Formula 1 chemically bonded to a surface thereof and a porous film comprising the same.

[Formula 1] M₂O₃

(wherein M is a Group 13 metal element in the Periodic Table).

Preferably, the metal oxide may be alumina (Al₂O₃), and the metal oxide may be chemically bonded to the surface of the nanocellulose fibers in a form of particles, or may be present in a coated form chemically bonded to the surface of the nanocellulose fibers.

Such metal oxide-nanocellulose fibers may be produced by introducing a metal alkoxide represented by Formula 2 and a reaction catalyst into water or an organic solvent, followed by a sol-gel reaction. 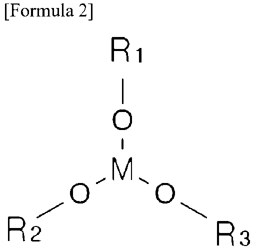 (wherein M is a Group 13 metal element in the Periodic Table, and R₁ to R₃ are the same as or different from each other and each independently hydrogen or C₁₋₂₀ alkyl).

The metal M is a Group 13 metal element in the Periodic Table, and thus, when the porous film according to the present invention is applied to a separator for a secondary battery, it has an advantage of not readily trapping lithium ions. In contrast, when the metal M is a Group 14 element such as silicon, ion transport is impeded during charge and discharge of a secondary battery, making it difficult to apply the porous film to a separator for a secondary battery.

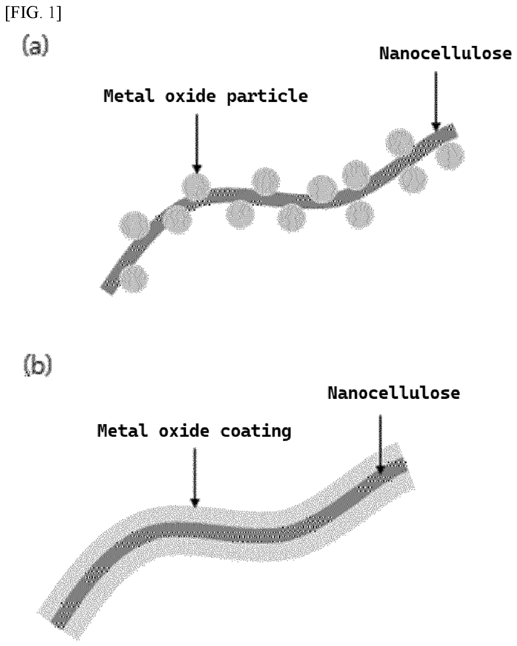

A feature of the present invention is that, depending on reaction conditions such as a composition and an amount of the metal alkoxide and/or the reaction catalyst, the metal oxide can be controlled to be chemically bonded to the surface of the nanocellulose fibers in a particle form as shown in FIG. 1(a), or in a form coating a part or all of the surface of the nanocellulose fibers as shown in FIG. 1(b).

When the metal oxide is chemically bonded in a particle form, a particle diameter of the metal oxide may be 50 to 500 nm. When the metal oxide is chemically bonded in a coated form, a coating thickness may be 2 to 50 nm.

The nanocellulose fibers may have a width of 5 to 500 nm and a length of 100 nm to 10 µm.

The porous film according to the present invention may further comprise an additive such as a dispersion stabilizer and/or a binder. More specifically, the additive may be at least one selected from the group consisting of acrylic, polyvinyl alcohol (PVA), polyvinylpyrrolidone (PVP), polyvanillin oxalate (PVO), styrene-butadiene rubber (SBR), sodium carboxymethyl cellulose (CMC), polyurethane (PU), and polyvinylidene fluoride (PVDF).

In conventional nanocellulose fibers, pores may be blocked due to hydrogen bonding attributable to hydroxyl (-OH) groups on the surface. In contrast, in the metal oxide-nanocellulose according to the present invention, metal oxide particles form nanopores on the surface and inhibit hydrogen bonding, thereby securing pores in the film.

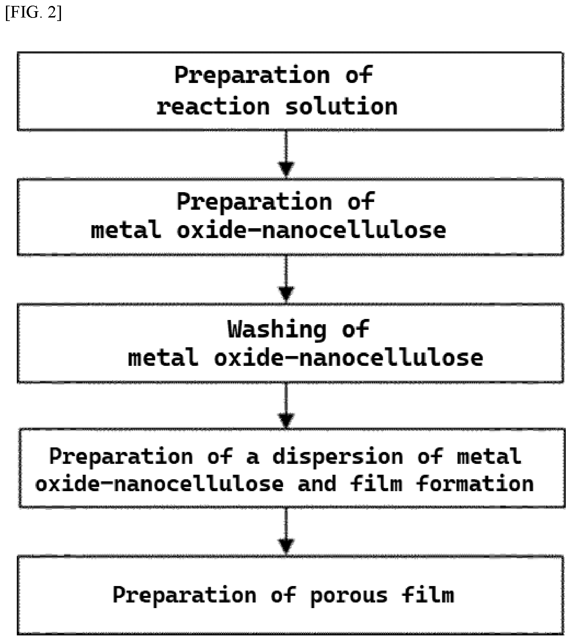

Hereinafter, a method for producing the porous film comprising the metal oxide-nanocellulose fibers according to the present invention will be described with reference to FIG. 2.

### (1) First step: Preparation of a reaction solution comprising a metal alkoxide, nanocellulose fibers, and a reaction catalyst

In the first step, a reaction solution is prepared by introducing, into water or an organic solvent, a metal alkoxide represented by Formula 2, and nanocellulose fibers. 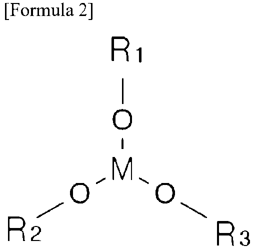 (wherein M is a Group 13 metal element in the Periodic Table, and R₁ to R₃ are the same as or different from each other and each independently hydrogen or C₁₋₂₀ alkyl).

Preferably, the metal alkoxide is an aluminum alkoxide represented by Formula 3. 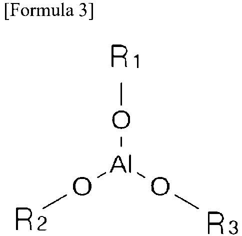 (wherein R₁ to R₃ are as defined in Formula 2).

More preferably, the aluminum alkoxide may be selected from the group consisting of aluminum isopropoxide, aluminum ethoxide, aluminum tri-sec-butoxide, aluminum tert-butoxide, and aluminum trimethoxide.

The metal alkoxide may be included in an amount of 0.01 to 5 wt% based on a total mass of the reaction solution, and more preferably 0.01 to 1 wt%.

The organic solvent in the first step may be selected from the group consisting of ethanol, isopropyl alcohol, butanol, NMP (N-methyl-2-pyrrolidone), and acetonitrile, and it is preferable to disperse the nanocellulose fibers in the organic solvent at a concentration of 0.05 to 2 wt%.

### (2) Second step: Preparation of metal oxide-nanocellulose fibers

In the second step, a reaction catalyst is introduced and a sol-gel reaction is performed to synthesize metal oxide-nanocellulose in which a metal oxide is chemically bonded to a surface of nanocellulose fibers in the reaction solution.

By introducing the reaction catalyst in the second step, the sol-gel reaction of the metal alkoxide is promoted, and the surface of nanocellulose is activated, thereby inducing the metal oxide to be more readily chemically bonded to the surface of nanocellulose.

The reaction catalyst may be an acid catalyst selected from the group consisting of hydrochloric acid, sulfuric acid, nitric acid, and acetic acid, or a basic catalyst selected from the group consisting of sodium hydroxide, lithium hydroxide, barium hydroxide, and ammonium hydroxide.

The reaction catalyst may be included in an amount of 1 to 30 wt% based on a total mass of the reaction solution.

As described above, a feature of the present invention is that, depending on reaction conditions such as the composition and/or the amount of the metal alkoxide and/or the reaction catalyst in the reaction solution, the structure of the metal oxide chemically bonded to the surface of the nanocellulose fibers may vary. Specifically, the metal oxide may be chemically bonded in a particle form or in a coated form, and, as needed, the particle form and the coated form may coexist.

In addition, the size of the chemically bonded particles or the thickness of the coating may be appropriately controlled according to the reaction conditions.

When the metal oxide is chemically bonded in a particle form, the particles may have a diameter of 50 to 500 nm. When the metal oxide is chemically bonded in a coated form, the coating may have a thickness of 2 to 50 nm.

### (3) Third step: Washing of metal oxide-nanocellulose fibers

In the third step, the metal oxide-nanocellulose fibers synthesized in the second step is washed using a washing solvent.

The washing may be performed by, for example, centrifugation, vacuum filtration, or osmotic filtration, but is not limited thereto.

### (4) Fourth step: Preparation of a dispersion of metal oxide-nanocellulose fibers and film formation

In the fourth step, the washed metal oxide-nanocellulose fibers obtained through the washing step is dispersed in water or an organic solvent at a predetermined concentration to prepare a dispersion, and a film having a predetermined thickness is then produced through a film-forming process.

That is, the dispersion of metal oxide-nanocellulose fibers is applied, and the applied dispersion is dried to form a thin film of metal oxide-nanocellulose fibers, after which a porous film is produced through a drying process such as electron-beam irradiation.

The metal oxide-nanocellulose fibers may be included in an amount of 0.01 to 5 wt% based on a total mass of the dispersion, and preferably 0.01 to 1 wt%.

The organic solvent in the fourth step may be at least one selected from the group consisting of acetone, methanol, ethanol, isopropyl alcohol, butanol, NMP (N-methyl-2-pyrrolidone), and acetonitrile, but is not limited thereto.

In addition, the dispersion may further comprise, in order to improve physical properties, at least one additive selected from the group consisting of acrylic, polyvinyl alcohol (PVA), polyvinylpyrrolidone (PVP), polyvanillin oxalate (PVO), styrene-butadiene rubber (SBR), sodium carboxymethyl cellulose (CMC), polyurethane (PU), and polyvinylidene fluoride (PVDF).

The film-forming process forms a film having a thin layer with a predetermined thickness by drying the solvent through, for example, vacuum filtration, coating, or casting.

In another aspect, the present invention relates to a separator for a secondary battery or an electrolyte for an all-solid-state battery, each comprising the porous film.

As described above, the metal oxide according to the present invention is a Group 13 metal oxide in the Periodic Table, and the metal ions do not readily trap lithium ions, and thus the porous film may be used as a separator for a secondary battery or as an electrolyte for an all-solid-state battery.

In the case of metal oxide particles such as alumina, which are used in conventional separators for secondary batteries, since the metal oxide particles are bonded to nanocellulose in an inorganic particle form, they have an advantage of scarcely affecting lithium-ion transport during charge and discharge of the battery. In addition, in the present invention, since the particle size and shape can be controlled through reaction conditions, an optimized separator can be provided according to use conditions.

Further, a separator manufactured from the porous film according to the present invention exhibits excellent durability at elevated temperatures. In addition, since the metal oxide is chemically bonded to the surface of the nanocellulose fibers, particle detachment can be fundamentally prevented, and, since a reduced thickness can be achieved even without a separate coating process, the energy density of the battery can be improved.

### [Examples]

### [Example 1] Preparation of alumina particle-bonded nanocellulose porous film

### 1)Preparation of alumina particle-bonded nanocellulose fibers

First, nanocellulose fibers dispersed in deionized (D.I.) water were solvent-exchanged into an alcohol-based organic solvent (isopropyl alcohol). The solvent exchange was carried out by repeating centrifugation three times.

The solvent-exchanged nanocellulose fibers were dispersed in the alcohol-based organic solvent (isopropyl alcohol) to an a concentration of 0.5 wt%. Thereafter, an aluminum alkoxide reagent was added to the solvent in which the nanocellulose fibers were dispersed, in an amount of 0.5 wt% based on the total solution, and the mixture was dispersed for several hours. Thereafter, a basic catalyst was introduced into the prepared dispersion (7 v/v% based on the total solution) to perform a sol-gel reaction. After uniform reaction by stirring, and after a predetermined time had elapsed, centrifugation was performed three times using isopropyl alcohol as a washing solution, thereby removing the reaction reagents.

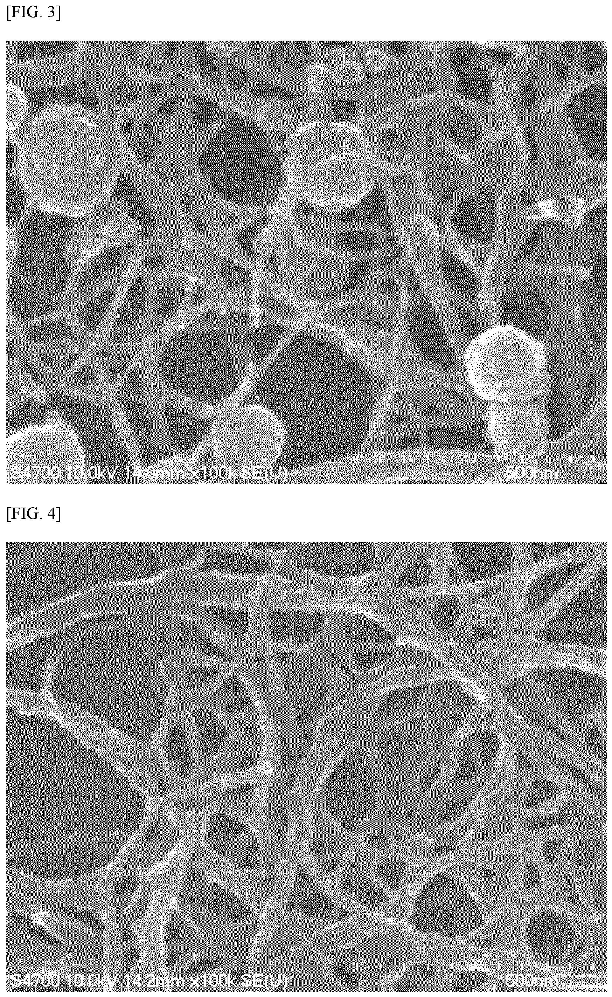

It was confirmed that the prepared alumina-nanocellulose fibers were present in a form in which alumina particles were chemically bonded to the surface of the nanocellulose fibers, as shown in FIG. 3.

### 2. Preparation of porous film

Next, the prepared alumina-nanocellulose fibers were added to isopropyl alcohol to a concentration of 0.1 wt% based on the solution, and then uniformly dispersed using a homogenizer at 6000 rpm for at least 10 minutes.

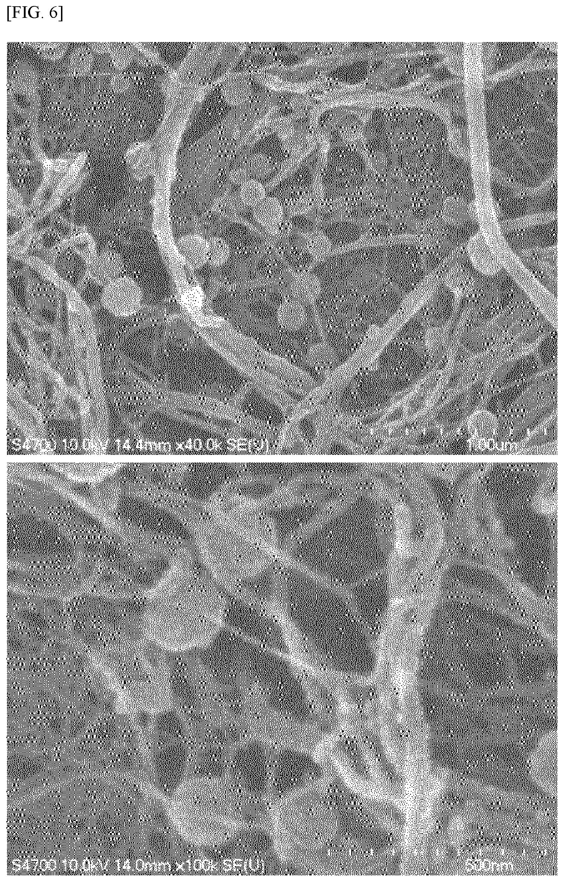

Thereafter, the prepared dispersion was filtered by a vacuum filtration method, and a film having a thickness of 10 µm or less was formed by controlling the amount of the dispersion subjected to filtration. The film was then separated from the filter and hot-air dried in an oven at 100°C or higher, thereby preparing an alumina particle-bonded nanocellulose porous film as shown in FIG. 6.

### [Example 2] Preparation of alumina-coated nanocellulose porous film

Alumina-coated nanocellulose fibers, in which alumina was present in a coated form on the surface as shown in FIG. 4, were prepared by conducting the same procedure as the nanocellulose fiber preparation process of Example 1, except that the amount of the alkoxide reagent was 0.07 wt%.

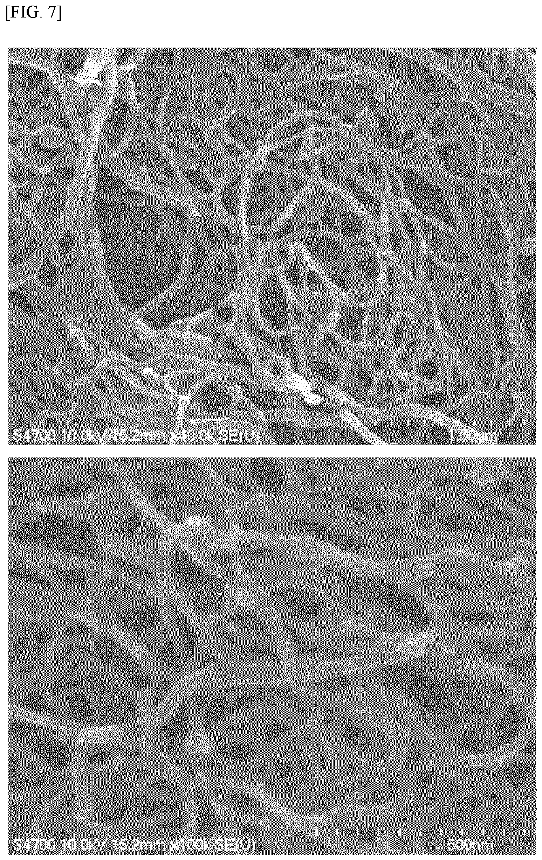

Thereafter, the same porous film preparation process as in Example 1 was performed, thereby preparing a porous film in which alumina was present in a form coated on a part of the nanocellulose surface, as shown in FIG. 7.

### [Comparative Example] Preparation of non-surface-treated nanocellulose film

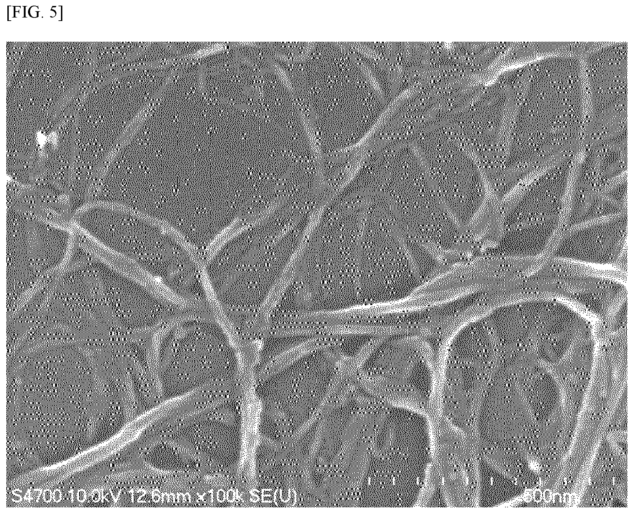

Non-surface-treated nanocellulose fibers as shown in FIG. 5 were prepared by conducting the same procedure as the nanocellulose fiber preparation process of Example 1, except that no alkoxide reagent was added.

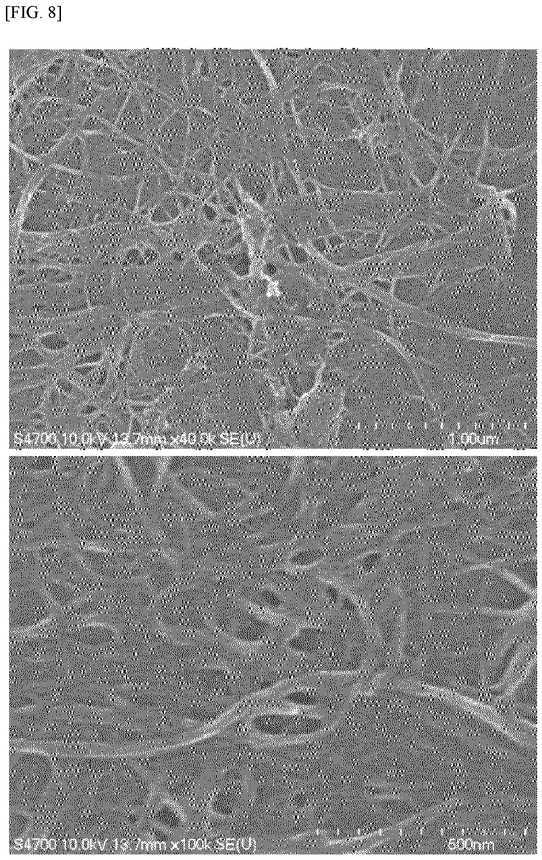

Thereafter, the same porous film preparation process as in Example 1 was performed, thereby preparing a non-surface-treated nanocellulose film as shown in FIG. 8.

### [Analysis Results]

### 1. Analysis of nanocellulose fibers

Analyses were conducted for the nanocellulose fibers prepared in Examples 1 and 2 and Comparative Example, as described below.

### (1) SEM image analysis

As shown in FIG. 3, on the surface of the nanocellulose fibers of Example 1, large alumina particles (average diameter: 160 nm) and fine particles (about 10 nm, <20 nm) were present in a coated form. In addition, it was confirmed that the fine particles coated the fiber surface, thereby increasing the thickness of the nanocellulose fibers (fiber diameter: from 30.3 nm for the non-surface-treated fibers to 47.6 nm after alumina particle bonding).

By controlling the amount of the aluminum alkoxide reagent, as shown in FIG. 4, fine alumina particles were present in a coated form on the surface of the cellulose fibers without formation of large alumina particles. In this case, it was confirmed that the fiber diameter increased to 44.1 nm (fiber diameter: from 30.3 nm for the non-surface-treated fibers to 44.1 nm after alumina coating).

As shown in FIG. 5, the non-surface-treated nanocellulose fibers of Comparative Example had no particles attached to the fiber surface, and thus the fiber surface appeared smooth in the SEM image. The fiber diameter was measured to be 30.3 nm on average.

### (2) EDS elemental analysis

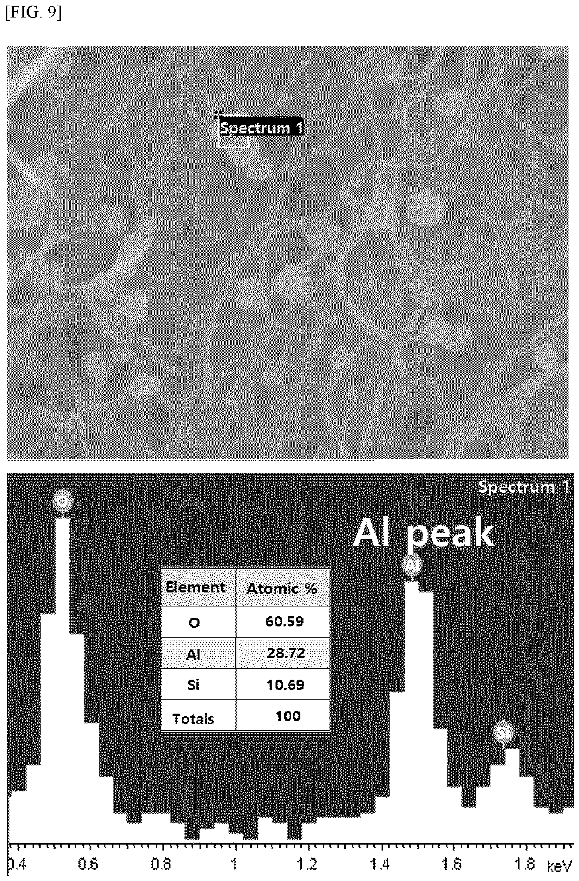

EDS analysis was performed to analyze the elements of the nanocellulose fibers prepared in Example 1 and Comparative Example. In the alumina particle-bonded nanocellulose fibers of Example 1, measurement of the particle region showed that an Al element content of about 28.7% was detected. Accordingly, it was confirmed that the formed nanoparticles were Al₂O₃ nanoparticles (see FIG. 9).

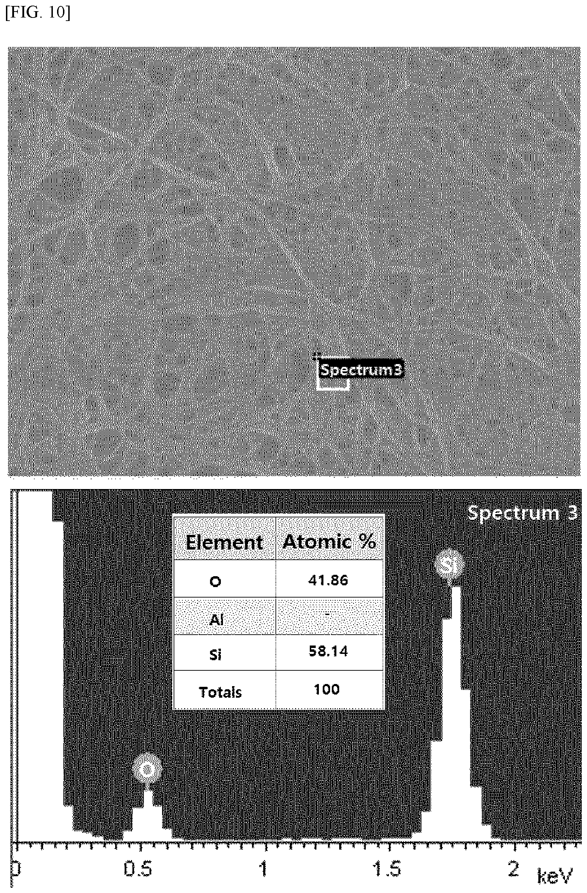

In contrast, in Comparative Example, no Al element was detected due to the non-surface-treated nanocellulose (see FIG. 10).

### (3) XPS elemental analysis

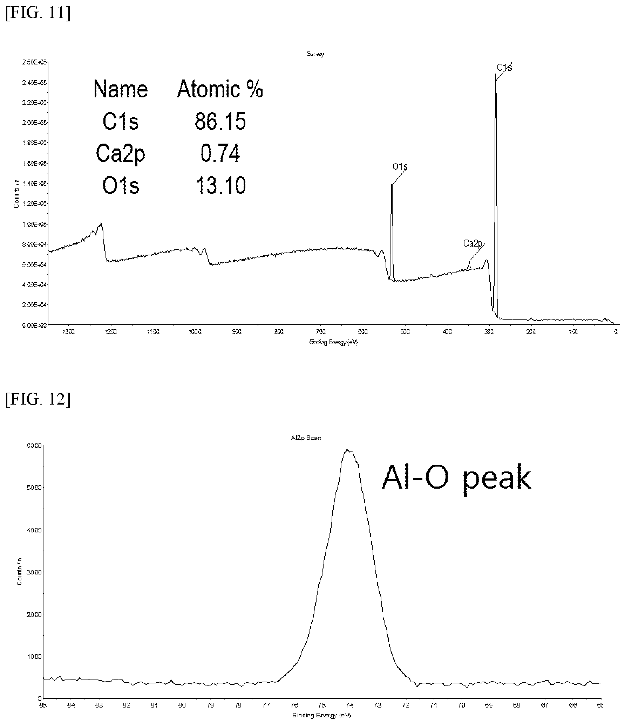

XPS analysis was performed to confirm formation of alumina nanoparticles in Example 1 and Comparative Example. In the alumina particle-bonded nanocellulose fibers of Example 1, Al was detected at 22.2 atomic% (see FIG. 11). In addition, as a result of narrow peak analysis of Al, the peak was attributed to Al-O bonding, thereby confirming formation of Al₂O₃ particles (see FIG. 12).

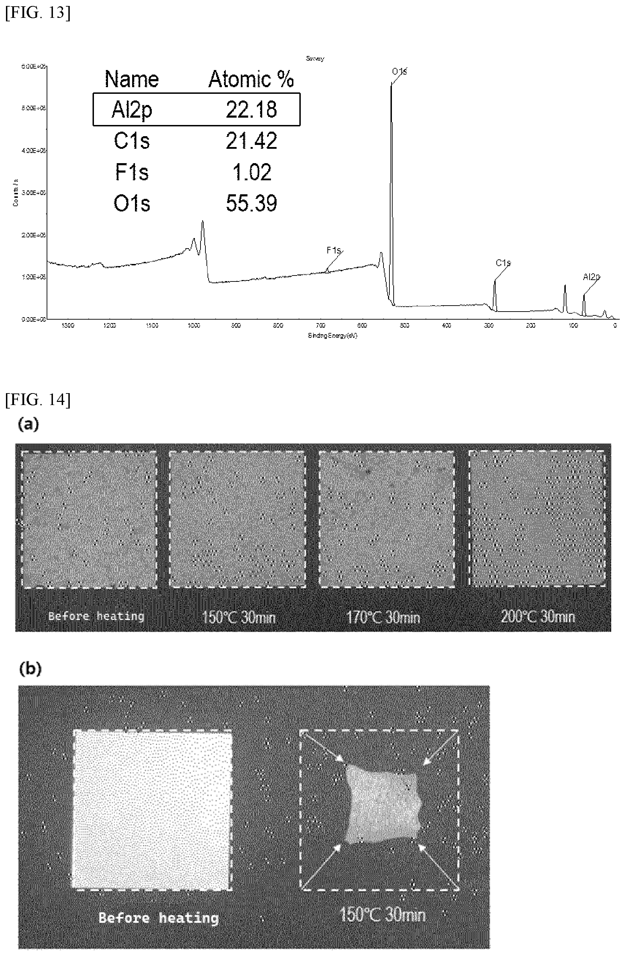

In contrast, no Al element was detected in the non-surface-treated nanocellulose fibers of Comparative Example (see FIG. 13).

### 2. Analysis of porous films

Analyses were conducted for the porous films prepared in Examples 1 and 2 and Comparative Example, as described below.

### (1) SEM image analysis

SEM analysis was performed to confirm the microstructure of the nanocellulose porous films.

As shown in FIGS. 6 and 7, it was confirmed that pores were formed on the surface of the surface-treated cellulose films of Examples 1 and 2, in which alumina was chemically bonded. This is because alumina nanoparticles on the surface of the nanocellulose fibers formed nanopores and inhibited hydrogen bonding, thereby enabling pore formation in the film.

In contrast, as shown in FIG. 8, it was confirmed that pores were scarcely formed in the non-surface-treated nanocellulose porous film of Comparative Example. This was understood to be because most pores were blocked by hydrogen bonding attributable to hydroxyl (-OH) groups on the surface of the nanocellulose fibers.

### (2) Thermal shrinkage test of films

A thermal shrinkage test was performed for the porous film of Example 1 and a conventional polyolefin-based porous film (Toray PE separator) as follows.

First, each porous film to be evaluated was cut to a size of 5 × 5 cm, and marks were placed at intervals of 4 cm in the vertical and horizontal directions to prepare samples. The samples were placed in a high-temperature oven (150 to 200°C) for 30 minutes and then removed, after which the distances between the marks were measured to evaluate the thermal shrinkage ratio (see FIG. 14).

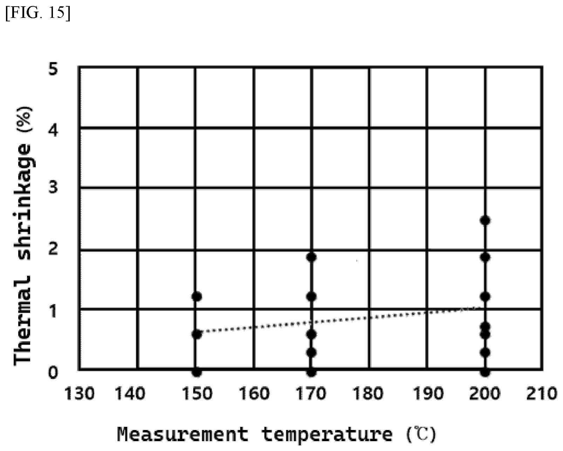

As can be seen from FIG. 14(a) and FIG. 15, the porous film of Example 1 exhibited almost no thermal shrinkage up to 200°C, thereby showing very excellent heat resistance at elevated temperatures. This tendency was maintained with similar high-temperature durability regardless of the sheet thickness (5 to 50 µm). For reference, a similar tendency was also confirmed in a porous film prepared using the alumina-coated nanocellulose fibers of Example 2.

In contrast, the conventional polyolefin-based porous film exhibited a thermal shrinkage ratio of 60% or more at 150°C, as shown in FIG. 14(b).

The embodiments disclosed in the present specification are merely provided as specific examples to assist in understanding the invention and are not intended to limit the scope of the present invention. It will be apparent to those of ordinary skill in the art to which the present invention pertains that various modifications and variations based on the technical spirit of the present invention may be made and implemented, in addition to the embodiments disclosed herein.

## Claims

1. Nanocellulose fibers having a metal oxide represented by Formula 1 chemically bonded to a surface thereof:
[Formula 1] M₂O₃,
wherein M is a Group 13 metal element in the Periodic Table.

2. The nanocellulose fibers of claim 1, wherein the metal oxide is alumina (Al₂O₃).

3. Thenanocellulose fibers of claim 1, wherein the metal oxide is chemically bonded to the surface of the nanocellulose fibers in a form of particles.

4. The nanocellulose fibers of claim 3, wherein the particles of the metal oxide have a particle diameter of 50 to 500 nm.

5. The nanocellulose fibers of claim 1, wherein the metal oxide is chemically bonded to the surface of the nanocellulose fibers in a coated form.

6. The nanocellulose fibers of claim 1, wherein the metal oxide is coated with a thickness of 2 to 50 nm.

7. The nanocellulose fibers of claim 1, wherein the nanocellulose fibers have a width of 5 to 500 nm.

8. The nanocellulose fibers of claim 1, wherein the nanocellulose fibers have a length of 100 nm to 10 µm.

9. A porous film comprising the nanocellulose fibers of claim 1.

10. The porous film of claim 9, further comprising at least one additive selected from the group consisting of acrylic, polyvinyl alcohol (PVA), polyvinylpyrrolidone (PVP), polyvanillin oxalate (PVO), styrene-butadiene rubber (SBR), sodium carboxymethyl cellulose (CMC), polyurethane (PU), and polyvinylidene fluoride (PVDF).

11. A method for producing the porous film of claim 9, the method comprising:
a first step of preparing a reaction solution by introducing nanocellulose fibers and a metal alkoxide represented by Formula 2 into water or an organic solvent;
a second step of adding a reaction catalyst to the reaction solution and performing a sol-gel reaction to synthesize metal oxide-nanocellulose fibers in which a metal oxide is chemically bonded to a surface of the nanocellulose fibers;
a third step of washing the synthesized metal oxide-nanocellulose fibers with a washing solvent; and
a fourth step of preparing a dispersion by dispersing the washed metal oxide-nanocellulose fibers in water or an organic solvent at a predetermined concentration and producing a film having a predetermined thickness through a film-forming process,
wherein Formula 2 is as follows: 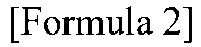 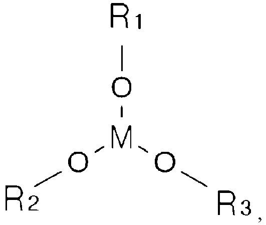
wherein M is a Group 13 metal element in the Periodic Table, and R₁ to R₃ are the same as or different from each other and each independently hydrogen or C₁₋₂₀ alkyl.

12. The method of claim 11, wherein the metal alkoxide in the first step is an aluminum alkoxide represented by Formula 3. 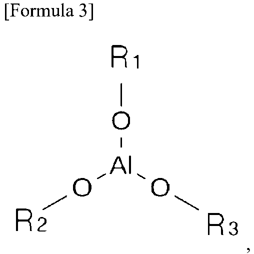 wherein R₁ to R₃ are as defined in Formula 2.

13. The method of claim 12, wherein the aluminum alkoxide is selected from the group consisting of aluminum isopropoxide, aluminum ethoxide, aluminum tri-sec-butoxide, aluminum tert-butoxide, and aluminum trimethoxide.

14. The method of claim 11, wherein the metal alkoxide in the first step is included in an amount of 0.01 to 5 wt% based on a total mass of the reaction solution.

15. The method of claim 11, wherein the organic solvent in the first step is selected from the group consisting of ethanol, isopropyl alcohol, butanol, NMP (N-methyl-2-pyrrolidone), and acetonitrile.

16. The method of claim 11, wherein the first step comprises dispersing the nanocellulose fibers in the organic solvent at a concentration of 0.05 to 2 wt%.

17. The method of claim 11, wherein the nanocellulose fibers in the first step have a width of 5 to 500 nm and a length of 100 nm to 10 µm.

18. The method of claim 11, wherein the reaction catalyst in the second step is an acid catalyst selected from the group consisting of hydrochloric acid, sulfuric acid, nitric acid, and acetic acid, or a basic catalyst selected from the group consisting of sodium hydroxide, lithium hydroxide, barium hydroxide, and ammonium hydroxide.

19. The method of claim 18, wherein the reaction catalyst is included in an amount of 1 to 30 wt% based on a total mass of the reaction solution.

20. The method of claim 11, wherein the metal oxide in the second step is chemically bonded to the surface of the nanocellulose fibers in a form of particles.

21. The method of claim 20, wherein the particles of the metal oxide have a particle diameter of 50 to 500 nm.

22. The method of claim 11, wherein the metal oxide in the second step is chemically bonded to the surface of the nanocellulose fibers in a coated form.

23. The method of claim 22, wherein the metal oxide is coated with a thickness of 2 to 50 nm.

24. The method of claim 11, wherein the third step comprises washing the metal oxide-nanocellulose by centrifugation, vacuum filtration, or osmotic filtration.

25. The method of claim 11, wherein the washing solvent in the third step is at least one selected from the group consisting of methanol, ethanol, isopropyl alcohol, butanol, NMP (N-methyl-2-pyrrolidone), acetonitrile, and water.

26. The method of claim 11, wherein the metal oxide-nanocellulose in the fourth step is dispersed in the dispersion in an amount of 0.01 to 5 wt% based on a total mass of the dispersion.

27. The method of claim 11, wherein the organic solvent in the fourth step is at least one selected from the group consisting of acetone, methanol, ethanol, isopropyl alcohol, butanol, NMP (N-methyl-2-pyrrolidone), and acetonitrile.

28. The method of claim 11, wherein the dispersion in the fourth step further comprises at least one additive selected from the group consisting of acrylic, polyvinyl alcohol (PVA), polyvinylpyrrolidone (PVP), polyvanillin oxalate (PVO), styrene-butadiene rubber (SBR), sodium carboxymethyl cellulose (CMC), polyurethane (PU), and polyvinylidene fluoride (PVDF).

29. The method of claim 11, wherein the film-forming process in the fourth step is vacuum filtration, coating, or casting.

30. A separator for a secondary battery, comprising the porous film of claim 9.

31. An electrolyte for an all-solid-state battery, comprising the porous film of claim 9.
